Europäisches Patentamt

European Patent Office

Office européen des brevets

(19)

(11) EP 0 833 737 B1

(12) **EUROPÄISCHE PATENTSCHRIFT**

(45) Veröffentlichungstag und Bekanntmachung des Hinweises auf die Patenterteilung:
**19.01.2000 Patentblatt 2000/03**

(21) Anmeldenummer: **96921960.9**

(22) Anmeldetag: **10.06.1996**

(51) Int Cl.⁷: **B29C 45/67**

(86) Internationale Anmeldenummer:
**PCT/EP96/02507**

(87) Internationale Veröffentlichungsnummer:
**WO 96/41711 (27.12.1996 Gazette 1996/56)**

(54) **SCHLIESSEINHEIT FÜR EINE SPRITZGIESSMASCHINE**

CLOSING UNIT FOR INJECTION MOULDING MACHINE

UNITE DE FERMETURE POUR PRESSE D'INJECTION

(84) Benannte Vertragsstaaten:
**AT BE CH DE DK ES FI FR GB GR IE IT LI LU MC NL PT SE**

(30) Priorität: **12.06.1995 LU 88623**

(43) Veröffentlichungstag der Anmeldung:
**08.04.1998 Patentblatt 1998/15**

(73) Patentinhaber: **HUSKY INJECTION MOLDING SYSTEMS LTD.**
**Bolton Ontario L7E 5S5 (CA)**

(72) Erfinder:
- **MAILLIET, Pierre**
 **L-8508 Redange (LU)**
- **LANFERMANN, Bernd**
 **D-46459 Rees (DE)**

(74) Vertreter: **Dr. Weitzel & Partner**
**Friedenstrasse 10**
**89522 Heidenheim (DE)**

(56) Entgegenhaltungen:
**DE-B- 1 155 885          FR-A- 2 390 271**
**GB-A- 2 064 415          US-A- 5 417 913**

**Beschreibung**

Die Erfindung betrifft eine Schließeinheit für eine Spritzgießmaschine.

Die Schließeinheit einer Spritzgießmaschine nimmt die Spritzgießform auf. Sie führt die zum Schließen und Öffnen der Spritzgießform notwendigen Bewegungen durch und erzeugt die zum Zuhalten, beziehungsweise Aufreißen der Spritzgießform notwendigen Kräfte. Die Hauptbestandteile jeder Schließeinheit sind eine bewegliche Schließplatte und eine feststehende Gegenplatte einspritzseitig (nachfolgend Einspritzplatte genannt), sowie eine Zuhaltevorrichtung. Ein Teil der Spritzgießform wird auf der feststehenden Einspritzplatte, der komplementäre Teil der Spritzgießform auf der beweglichen Schließplatte aufgespannt. Unter Zuhaltevorrichtung ist die Vorrichtung zu verstehen die beim Einspritzen und Nachdrücken die erforderliche Schließkraft zum Zuhalten der Spritzgießform erzeugt.

Es sind sowohl mechanische Zuhaltevorrichtungen mit Hebelmechanismen, als auch hydraulische Zuhaltevorrichtungen mit Verriegelung durch Hydrozylinder bekannt. Siehe z.B. die GB-A-2 064 415 und die DE-B-1 155 885.

Die vorliegende Erfindung betrifft eine Schließeinheit mit hydraulischer Zuhaltung. In dem Handbuch "Kunststoff-Maschinen-Führer 3. Auflage, herausgegeben von Dr.-Ing. Friederich Johannaber, Carl Hanser Verlag München Wien 1992", sind verschiedene Bauarten für Schließeinheiten mit hydraulischer Zuhaltung beschrieben. Bei den meisten Schließeinheiten mit hydraulischer Zuhaltung ist ein Kraftzylinder als Druckkissen ausgebildet und auf einer Abstützplatte hinter der beweglichen Schließplatte angeordnet. Aus Bild 56, Seite 110 des vorgenannten Handbuchs, ist jedoch eine Schließeinheit mit vier Hydrozylindern an der feststehenden Einspritzplatte bekannt. Die Kolben dieser Hydrozylinder sind über Zugstangen starr mit der beweglichen Schließplatte verbunden. Die vier Hydrozylinder erzeugen die notwendige Schließkraft, müssen jedoch auch gleichzeitig die Öffnungs- und Schließbewegungen der beweglichen Schließplatte ausführen. Da die vier Hydrozylinder gleichzeitig eine Zu haltefunktion und eine Verschiebefunktion erfüllen, müssen sie sowohl einen großen Querschnitt als auch einen großen Hub aufweisen und sind daher relativ platzaufwendig. Die vier relativ großen Hydrozylinder behindern folglich die Zugänglichkeit der Spritzeinheit wesentlich und haben außerdem einen sehr hohen Öldurchfluß. Die Baulänge dieser Schließeinheit ist wesentlich größer als der größtmögliche Abstand zwischen der Einspritzplatte und der Schließplatte. Aus Bild 53 B, Seite 108 des gleichen Handbuchs, ist eine kompaktere Schließeinheit mit ebenfalls vier Hydrozylindern an der feststehenden Einspritzplatte bekannt. Die vier Zugstangen sind über Klauen an ihren Enden lösbar mit dem jeweiligen Hydrozylinder verbunden. Öffnungs- und Schließbewegungen werden bei entkoppelten Zugstangen durch seitlich angebrachte Eilgangzylinder erzeugt. Der Hub der vier Hydrozylinder muß bei dieser Bauart folglich nur der Längendifferenz zwischen der größten und kleinsten Spritzform entsprechen. Diese Bauart ist hauptsächlich interessant falls die verwendeten Spritzgießformen alle mehr oder weniger die gleiche Länge aufweisen. Soll die Schließeinheit jedoch mit Spritzgießformen von unterschiedlicher Länge benutzt werden, muß der Hub der Hydrozylinder relativ groß sein und die Schließeinheit aus Bild 53B weist im wesentlichen die gleichen Nachteile wie die vorerwähnte Schließeinheit aus Bild 56 auf.

Der vorliegenden Erfindung liegt die Aufgabe zugrunde eine kompakte Schließeinheit zu schaffen, welche bestens für Spritzgießformen unterschiedlicher Länge geeignet ist. Diese Aufgabe wird durch eine Schließeinheit nach Anspruch 1 gelöst.

Die erfindungsgemäße Schließeinheit umfaßt, in bekannter Weise, eine bewegliche Schließplatte und eine feststehende Gegenplatte mit Einspritzöffnung und. Eine Verschiebevorrichtung für die bewegliche Schließplatte, erbringt die Öffnungs- und Schließbewegungen und erlaubt es die bewegliche Schließplatte relativ zur festen Gegenplatte zu positionieren. Mehrere hydraulische Kraftzylinder sind an der feststehenden Gegenplatte zum Erzeugen der Schließkraft angeordnet. Die Schließplatte weist pro Kraftzylinder je eine Zugstange zum Übertragen einer Schließkraft vom Kolben des Kraftzylinders auf die bewegliche Schließplatte auf. Die erfindungsgemäße Schließeinheit unterscheidet sich von der bekannten Schließeinheit, die die vorgenannten Merkmale aufweist, hauptsächlich durch Verriegelungsbüchsen an der Gegenplatte. Diese Verriegelungsbüchsen sind um ihre Achse drehbar gelagert und jeweils mit dem Kolben eines Kraftzylinders mechanisch verbunden, wobei die Zugstangen die hydraulischen Kraftzylinder und die Verriegelungsbüchsen axial durchqueren. Die Verriegelungsbüchsen sind durch einen oder mehrere Stellantriebe in eine erste und zweite Winkelstellung drehbar. Erste Verriegelungsmittel längs einem Stangenabschnitt A an den Zugstangen und zweite, komplementäre Verriegelungsmittel in der Verriegelungsbüchse ermöglichen in der ersten Winkelstellung ein axiales Durchschieben der Zugstangen durch die hydraulischen Kraftzylinder und die Verriegelungsbüchsen. In der zweiten Winkelstellung wirken hingegen die ersten Verriegelungsmittel im Stangenabschnitt A an den Zugstangen mit den zweiten Verriegelungsmittel der Verriegelungsbüchsen zum Übertragen der erforderlichen Schließkraft zusammen.

Die erfindungsgemäße Schließeinheit erlaubt eine äußerst kompakte, platzsparende Bauweise. Der erforderliche Hub der Kraftzylinder und damit deren äußere Abmessungen sind minimal. Im Vergleich zu bekannten Schließeinheiten zeichnet sich die erfindungsgemäße Schließeinheit durch eine sehr geringe Baulänge aus. Die Baulänge der Schließeinheit muß in der Tat nicht wesentlich größer als der größtmögliche Abstand zwischen der Gegenplatte und der Schließplatte sein. Sämtliche Hydraulikanschlüsse können an der feststehenden Gegenplatte angeordnet sein. Flexible Hydraulikanschlüsse sind demnach nicht erfordert. Trotzdem ist die Schließeinheit hervorragend geeignet um Spritzgießformen unterschiedlicher Länge aufzunehmen. Der Längenbereich der Spritzgießformen wird hierbei einzig und allein durch die Länge des Stangenabschnitts A mit den ersten Verriegelungsmitteln begrenzt.

Die ersten Verriegelungsmittel umfassen vorteilhaft eine Außenverzahnung an der Zugstange, und die zweiten Verriegelungsmittel eine Innenverzahnung in der Verriegelungsbüchse. Innenverzahnung und Außenverzahnung sind hierbei durch Längsnuten in mindestens zwei Zahnreihen unterteilt. In der ersten Winkelstellung sind die Zahnreihen der Außenverzahnung durch Längsnuten der Innenverzahnung und die Zahnreihen der Innenverzahnung durch die Längsnuten der Außenverzahnung axial durchführbar, so daß ein axiales Durchschieben der Zugstangen durch die hydraulischen Kraftzylinder und die Verriegelungsbüchsen kann. In der zweiten Winkelstellung sind die Zähne der Innenverzahnung dagegen hinter den Zähnen der Außenverzahnung zum Übertragen einer Zugkraft eingreifbar.

Die Zähne der Innen- und Außenverzahnung können ring- oder schraubenförmig angeordnet sein. Um ein einwandfreies Einrenken der Innenverzahnung in die Außenverzahnung zu gewährleisten, soll zwischen Innen- und Außenverzahnung ein wesentliches axiales Flankenspiel ausgebildet sein. Ein großes Flankenspiel hat jedoch auch wesentliche Nachteile. So vergrößert sich zum Beispiel der Arbeitshub der Kraftzylinder und damit der Energieverbrauch der Schließeinheit. Die Durchflüsse durch die Kraftzylinder werden erheblich größer, so daß die Hydraulikanlage der Schließeinheit ebenfalls größer ausgelegt werden muß. Weiterhin werden die Verriegelungsbuchsen bei Überwindung eines großen Flankenspiels relativ stark beschleunigt, so daß die Zähne der Innenverzahnung mit großer Wucht auf die Zähne der Außenverzahnung prallen.

Im Rahmen dieser Erfindung wird jedoch eine äußerst einfache und kostengünstige Lösung vorgeschlagen die die Nachteile eines großen axialen Flankenspiels restlos beseitigt. Diese Lösung besteht im wesentlichen darin, daß der Kolben des hydraulischen Kraftzylinders über ein Drehgewinde mit der Verriegelungsbüchse verschraubt ist, und daß der Kolben gegen Drehen gesichert ist. Durch Drehen der Verriegelungsbuchse um einen Winkel γ von der ersten Winkelstellung in die zweite Winkelstellung erfährt die Verriegelungsbuchse demnach einen Vorschub X relativ zum feststehenden Kolben. Die Steigung des Drehgewindes ist dann vorteilhaft derart ausgelegt, daß durch Drehen der Verriegelungsbüchse aus der ersten Winkelstellung in die zweite Winkelstellung, das vorhandene axiale Flankenspiel S zwischen Innen- und Außenverzahnung einseitig verteilt wird, derart daß zwischen den Zahnflanken die die Kraft übertragen sollen kein wesentliches Flankenspiel mehr besteht. Wird hierbei der Stellantrieb zum Drehen der Verriegelungsbuchsen derart ausgelegt, daß er die Verriegelungsbüchsen sowohl durch eine Linksdrehung als auch durch eine Rechtsdrehung in eine zweite Winkelstellung stellen kann, wird das Flankenspiel S zwischen Innen- und Außenverzahnung je nach Drehrichtung einmal linksseitig und einmal rechtsseitig verteilt. Die Verzahnungen werden demnach in der ersten Drehrichtung automatisch spielfrei für die Übertragung der Schließkraft, und in der zweiten Drehrichtung automatisch spielfrei für die Übertragung einer Öffnungskraft auf die Schließplatte.

Die Gegenplatte weist vorteilhaft drehbar gelagerte Gleitschuhe als radiale Führung für die Zugstangen auf. Die Längsnuten in der Außenverzahnung bilden Führungsflächen für diese Gleitschuhe aus, welche über den Stangenabschnitt A hinaus verlängert sind.

In der nachfolgenden detaillierten Beschreibung wird unter anderem noch eine äußerst vorteilhafte Ausgestaltung des Stellantriebs vorgestellt, sowie eine ebenfalls sehr vorteilhafte hydraulische Steuerung der Schließeinheit.

Ausführungsbeispiele, sowie weitere Merkmale und Vorteile der Erfindung werden anhand der Figuren der beiliegenden Zeichnungen eingehend beschrieben.

Es zeigen:

- Figur 1 eine Ansicht einer erfindungsgemäßen Schließeinheit;
- Figur 2 einen Längsschnitt durch die Schließeinheit der Figur 1;
- Figur 3 und 4 einen Querschnitt durch eine Zugstange und eine Verriegelungsbüchse der Schließeinheit der Figur 1;
- Figur 5 einen Querschnitt durch die Zugstange;
- Figur 6 einen Querschnitt durch die Verriegelungsbüchse;
- Figur 7 einen Schnitt entlang der Schnittlinie A-A der Figur 3;
- Figur 8 einen Schnitt entlang der Schnittlinie B-B der Figur 4;
- Figur 9 eine Vergrößerung aus dem Längsschnitt der Figur 2;
- Figur 10 einen Schnitt durch einen Stellantrieb für zwei Verriegelungsbüchsen;
- Figuren 11-14 Querschnitte durch verschiedene Ausführungen der Zugstange;
- Figuren 15-20 180°-Abwicklungen der Verzahnungen an der Zugstange und der Verriegelungsbüchse;
- Figur 21 ein Schema der hydraulischen Steuerung der Schließeinheit.

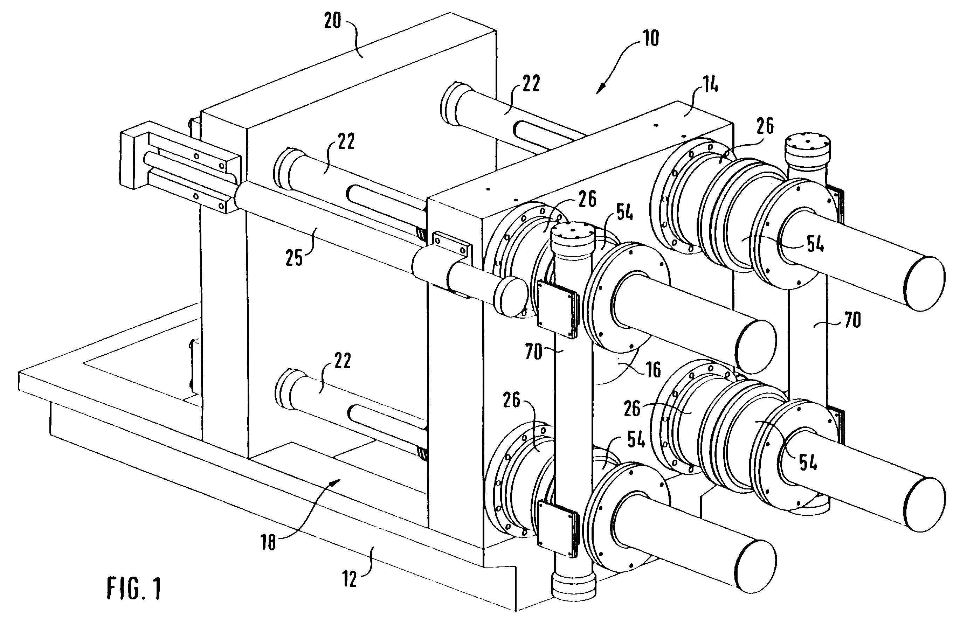

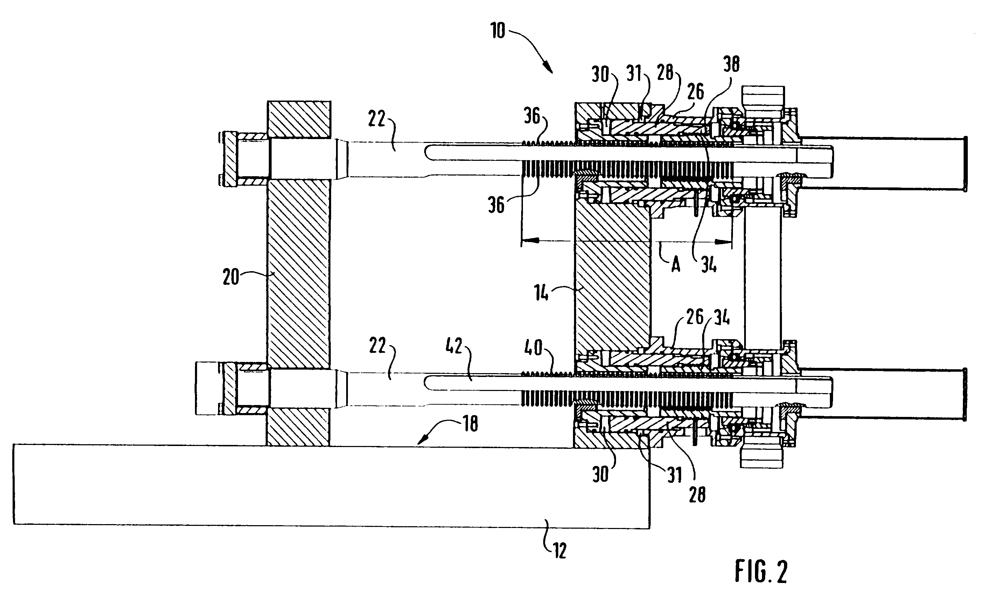

Der allgemeine Aufbau einer erfindungsgemäßen Schließeinheit 10 wird anhand der Figuren 1 und 2 erläutert. Auf einem Untergestell 12 ist eine Einspritzplatte (oder Gegenplatte) 14, mit einer zentralen Einspritzöffnung 16 feststehend montiert. Das Untergestell bildet ein Führungsbett 18 für eine bewegliche Schließplatte 20 aus. Auf Einspritzplatte 14 und Schließplatte 20 werden jeweils die komplementären Hälften einer Spritzform (nicht gezeigt) aufgespannt. Die bewegliche Schließplatte 20 ist über eine Betätigungsvorrichtung, welche zum Beispiel zwei seitlich angeordnete Verschiebezylinder 25 umfaßt, verschiebbar. Sie wird hierbei in dem Untergestell 12 geführt. Die Verschiebezylinder 25 öffnen und schließen demnach die komplementären Hälften der Spritzform durch Verschieben der Schließplatte 20 relativ zur Einspritzplatte 14. Das Gehäuse der Verschiebezylinder 25 ist jeweils an der feststehenden Einspritzplatte 14 befestigt, so daß beide Verschiebezylinder 25 einen festen Hydraulikanschluß auf der festen Einspritzplatte 14 haben können.

Vier Zugstangen 22 erstrecken sich von bewegliche Schließplatte 20 durch die feststehende Einspritzplatte 14. An der Schließplatte 20 sind die Zugstangen 22 starr befestigt. An der feststehenden Einspritzplatte 14 ist jeder Zugstange 22 ein Kraftzylinder 26 zugeordnet, dessen Gehäuse starr mit der Einspritzplatte 14 verbunden ist.

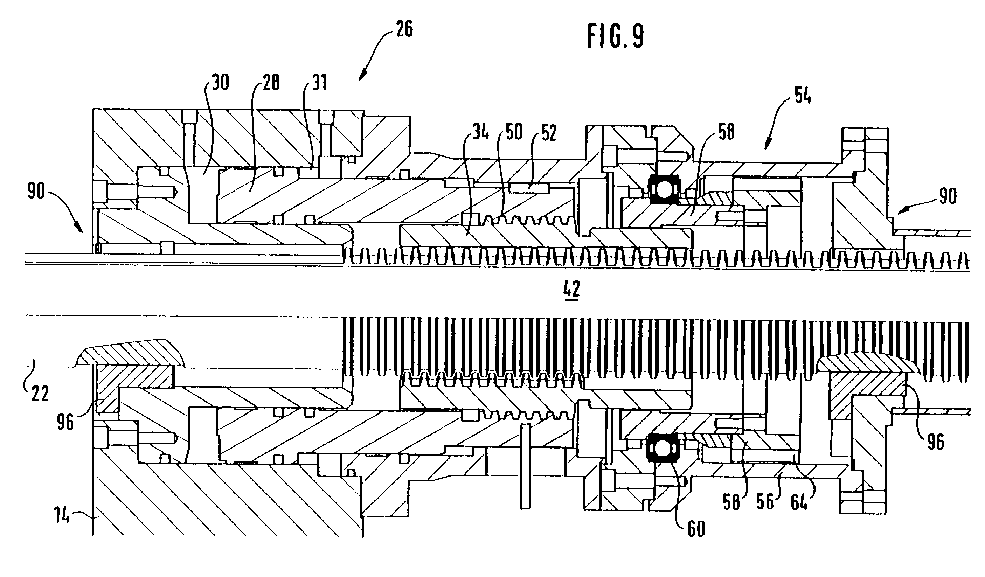

In Figur 2, respektiv in Figur 9, erkennt man, daß diese Kraftzylinder 26 jeweils einen ringförmigen Kolben 28 umfassen. Jeder dieser Kolben 28 ist drehbar mit einer Verriegelungsbüchse 34 verbunden. Die Zugstangen 22 durchqueren hierbei die hydraulischen Kraftzylinder 26 und die Verriegelungsbüchsen 34 axial. An den Zugstangen 22 sind erste Verriegelungsmittel 36 jeweils längs einem Stangenabschnitt A vorgesehen. Jede der Verriegelungsbüchsen 34 weist in ihrem Innern, zu den ersten Verriegelungsmitteln 36 komplementäre, zweite Verriegelungsmittel 38 auf. Diese ersten und zweiten Verriegelungsmittel 36 und 38 sind derart ausgebildet, daß in einer ersten Winkelstellung der Verriegelungsbüchse 34, die Zugstange 22 axial durch die Verriegelungsbüchse 34 durchführbar ist, wobei die zweiten Verriegelungsmittel 38 jedoch durch Drehen der Verriegelungsbüchse 34 in eine zweite Winkelstellung gebracht werden können, in welcher sie innerhalb des Stangenabschnitts A mit den ersten Verriegelungsmittel 36 zum Übertragen der erforderlichen Schließkraft zusammenwirken.

Im jedem Kraftzylinder wird eine stirnseitige erste Druckkammer 30 einerseits durch die Einspritzplatte 14 und andererseits durch den Kolben 28 axial begrenzt. Wird, nach Verriegelung der Verriegelungsbüchsen 34 im Stangenabschnitt A, die erste Druckkammer 30 unter Druck gesetzt, übt der Kolben 28 auf die Zugstangen 22, über die an den Zugstangen 22 verriegelten Verriegelungsbüchsen 34, eine axiale Zugkraft aus, wobei die Reaktionskraft durch die feststehende Einspritzplatte 14 aufgenommen wird. Diese erste Druckkammer 30 erzeugt demnach die zum Zuhalten der Spritzgießform erforderliche Schließkraft. In einer zweiten Druckkammer 31 bildet der Kolben 28 eine wesentlich geringere Druckfläche als Schulterfläche aus. Wird diese zweite Druckkammer 31 unter Druck gesetzt und die erste Druckkammer entlastet, übt der Kolben 28 auf die Zugstangen 22 eine axiale Druckkraft in entgegengesetzte Richtung der vorbeschriebenen Schließkraft aus. Diese Druckkraft dient zum Aufreißen der Spritzform nach dem Guß.

Zum Verschieben der beweglichen Schließplatte 20 auf dem Führungsbett 18 mittels der Verschiebezylinder 25, steht die Verriegelungsbüchse 34 in der ersten Winkelstellung. In dieser ersten Winkelstellung gleiten die Zugstangen 22 beim Verschieben der Schließplatte 20 axial durch die Verriegelungsbüchsen 34. Hat die Schließplatte 20 ihre gewollte Position auf dem Führungsbett 18 erreicht, werden die Zugstangen 22 in den Verriegelungsbüchsen 34 der beweglichen Schließplatte 20 durch Drehen der Verriegelungsbüchsen 34 von der ersten Winkelstellung in die zweite Winkelstellung verriegelt. Die vier Kraftzylinder 26 können jetzt die benötigte Schließkraft über die Zugstangen 22 auf die Schließplatte 20 übertragen, das heißt die Schließplatte 20 in Richtung der Einspritzplatte 14 ziehen.

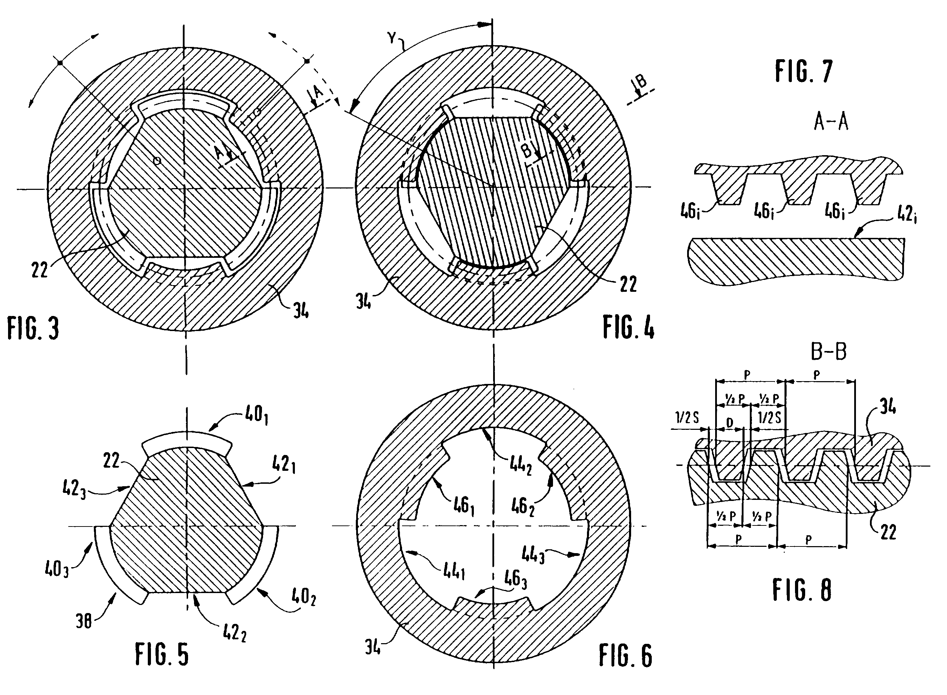

Eine vorteilhafte Ausgestaltung der Verriegelungsmittel wird anhand der Figuren 2 bis 8 näher beschrieben. Die Verriegelungsmittel im Stangenabschnitt A an der Zugstange 22 umfassen (siehe Figur 2 und 5) vorteilhaft eine Außenverzahnung 40, welche durch Längsnuten 42 in zum Beispiel drei axiale Zahnreihen $40_1$, $40_2$, $40_3$ unterteilt ist. In diesen Zahnreihen $40_1$, $40_2$, $40_3$ sind die Zähne der Außenverzahnung jeweils parallel, in gleichem Abstand zueinander angeordnet. Die Verriegelungsbüchsen 34 (siehe Figur 9 und 6) umfassen eine komplementäre Innenverzahnung, welche ebenfalls durch Längsnuten $44_1$, $44_2$, $44_3$, in drei axiale Zahnreihen $46_1$, $46_2$, $46_3$ unterteilt ist. Die Längsnuten $42_i$ in der Außenverzahnung der Zugstange 22 sind etwas breiter als die Zähne $46_i$ der Verriegelungsbüchse 34, und die Längsnuten $44_i$ in der Innenverzahnung der Verriegelungsbüchse 34 sind etwas breiter als die Zähne $40_i$ der Zugstange 22.

In einer ersten Winkelstellung der Zugstange, die in Figur 3 gezeigt ist, liegen die Zähne 46i der Außenverzahnung der Zahnstange 22 in den Längsnuten $44_i$ der Verriegelungsbüchse 34. Die Zugstange 22 ist in dieser Winkelstellung durch die Verriegelungsbüchse 34 hindurchschiebbar, wobei die Zähne $40_i$ der Außenverzahnung durch die Längsnuten $44_i$ der Innenverzahnung, und die Zähne $46_i$ der Innenverzahnung durch die Längsnuten $42_i$ der Außenverzahnung geführt werden. Figur 7 zeigt in einem Schnitt entlang der Schnittlinie A-A der Figur 3, die Zähne der Innenverzahnung in den Längsnuten der Außenverzahnung.

In einer zweiten Winkelstellung, siehe Figur 4, nach Drehen der Verriegelungsbüchse 34 um einen Winkel $\gamma = 180°/n$ (n = Anzahl der Längsnuten, respektive der Zahnreihen), befinden sich die Zähne $46_i$ der Verriegelungsbüchse 34 axial zwischen den Zähnen $40_i$ der

Zugstange 22. In dieser zweiten Winkelstellung greifen also die Zahnreihen der Innenverzahnung in die Zahnreihen der Außenverzahnung zum Übertragen der erforderlichen Schließkraft ein.

Figur 8 zeigt einen Schnitt entlang der Schnittlinie B-B der Figur 4. Man erkennt daß die Zähne der Außen- und Innenverzahnung einen trapezförmigen Querschnitt aufweisen. Die Verzahnungen können schraubenförmig ausgeführt sein, das heißt daß die Zähne entlang einer Schraubenlinie angeordnet sind, und die Verzahnungen demnach ein Gewinde mit einer Steigung P ausbilden. Die Verzahnungen können jedoch auch ringförmig ausgebildet sein, das heißt daß die Zähne parallele Ringe ausbilden, die jeweils in einem Abstand P (auch Teilung P genannt) zueinander angeordnet sind.

Damit die Innenverzahnung beim Drehen der Verriegelungsbüchse 34 in die Außenverzahnung eingreifen kann, müssen natürlich in der ersten Winkelstellung der Verriegelungsbüchse 34 die Zähne $46_i$ der Innenverzahnung axial zwischen den Zähnen $40_i$ der Außenverzahnung stehen. Damit kleinere Positionierungsfehler der beweglichen Schließplatte ein Eingreifen der Innenverzahnung in die Außenverzahnung nicht behindern, ist ein relativ großes axiales Flankenspiel zwischen der Innenverzahnung und der Außenverzahnung erwünscht.

Aus Figur 8 erkennt man, daß:

$$P = 2D+S$$

wobei:

P = Teilung oder Steigung;
D = mittlere Zahnbreite;
S = axiales Flankenspiel.

In der Praxis hat es sich als vorteilhaft erwiesen wenn S = 0,5D, also P = 2,5D ist.

Die vier Verriegelungsbüchsen 34 übertragen extrem hohe Schließkräfte über die Zugstangen 22 auf die bewegliche Schließplatte 20. Hinzu kommt, daß die Frequenz der Schließ- und Öffnungsvorgänge in der Praxis sehr hoch ist. Die Verriegelungsbüchsen 34 und Zugstangen 22 sind folglich extrem hohen Belastungen ausgesetzt und es kann zu bleibenden Verformungen kommen, die die Funktion der Verriegelungsvorrichtung beeinträchtigen. Um die negativen Auswirkungen solcher bleibenden Verformungen auf die Verriegelungsfunktion zu reduzieren, können vorteilhaft folgende Vorkehrungen getroffen werden:

a) Die Verriegelungsbüchsen 34 sind derart an den Kolben 28 zu befestigten, daß sie bei Übertragung der Schließkraft auf die Zugstangen 22 unter Zugspannungen stehen. Hierdurch wird erreicht, daß sowohl die Zugstangen 22, als auch die Verriegelungsbüchsen 34 eine Dehnung in gleicher Richtung erfahren, das heißt gleichartig verformt werden.

b) Die Querschnitte der Verriegelungsbüchsen 34 und der Zugstangen 22 sollen derart gestaltet sein, daß sie ungefähr gleich großen Zugspannungen beim Übertragen der Schließkraft ausgesetzt sind.

c) Bei gleicher Zahngeometrie soll die Basis der Zähne der Außenverzahnung ungefähr gleich der Basis der Zähne der Innenverzahnung sein, damit die Spannungsmaxima an diesen kritischen Stellen ungefähr gleich groß sind. Dies bedeutet z.B., daß die Bogenlänge (in Grad) der Zähne der Außenverzahnung größer als die Bogenlänge der Zähne der Innenverzahnung ist.

d) Die Zähne der Außenverzahnung sollten eine größere Härte als die Zähne der Innenverzahnung aufweisen. Hierbei sollte die Flankenfläche der Zähne der Außenverzahnung auch größer als die Flankenfläche der Zähne der Innenverzahnung sein, damit ein Zahnabdruck der Zähne der Außenverzahnung auf den weicheren Zähnen der Innenverzahnung vermieden wird.

e) Die Streckgrenze der Zugstangen 22 soll ungefähr 20% höher als die Streckgrenze der Verriegelungsbüchsen 34 sein. Hierdurch wird in Kombination mit den Maßnahmen b) und c) erreicht, daß plastische Verformungen bei Überbelastung vor allem an den Verriegelungsbüchsen 34 auftreten und weniger an den Zugstangen 22. Plastische Verformungen an den Zugstangen 22 sind weitaus störender, da sie nämlich die axiale Homogenität der Außenverzahnung im Stangenabschnitt A zerstören, was zu Ungenauigkeiten bei der Positionierung der Schließplatte 20 führen kann wenn verschiedene Formgrößen benutzt werden. Weiterhin ist das Ersetzen der Zugstangen 22 weitaus teurer als das Ersetzen der Verriegelungsbüchsen 34.

Es ist anzumerken, daß die Vorkehrungen a), b) und c) der obigen Aufzählung ebenfalls im Normalfall der elastischen Verformung vorteilhafte Auswirkungen auf die Zugkraftverteilung haben. Die elastische Verformung der Verriegelungsbüchsen und die elastische Verformung der Zugstangen sind durch diese Maßnahmen gleichgerichtet und von der gleichen Größenordnung, so daß die zu übertragende Zugkraft sich auf sämtliche ineinander eingreifende Zähne der Außen- und der Innenverzahnung verteilt.

Bei der Beschreibung der Figur 8 wurde darauf hingewiesen, daß ein bedeutendes Flankenspiel den Vorteil hat, daß kleine Ungenauigkeiten bei der Positionierung der Schließplatte 20 durch die Verschiebezylinder 25 ein Einrenken der Innenverzahnung der Verriegelungsbüchsen 34 in die Außenverzahnung der Zugstangen 22 nicht behindern. Jedoch hat ein bedeutendes axiales Flankenspiel auch wesentliche Nachteile. Erstens nimmt der Hub des Kolben 28 mit dem Flankenspiel S zu, wodurch der Öl- und der Energieverbrauch der Schließzylinder größer wird. Zweitens erhalten die Verriegelungsbüchsen 34 anfänglich eine hohe Beschleunigung bei Druckbeaufschlagung der Kraftzylinder 28, so daß die Zähne der Innenverzahnung wuchtig gegen die Zähne der Außenverzahnung stoßen. Aus diesem Grund ist es vorteilhaft, eine Vorrichtung vorzusehen, die das Flankenspiel in Richtung der Kraftübertragung reduziert, beziehungsweise beseitigt.

Eine äußerst vorteilhafte Ausgestaltung dieser Vorrichtung wird anhand der Figur 9 beschrieben. Die Verriegelungsbüchse 34 ist über ein Gewinde 50 (nachfolgend Drehgewinde 50 genannt) drehbar mit dem Ringkolben 28 verschraubt; zum Beispiel mittels des Drehgewindes 50 in das freie Ende des Ringkolbens 28 eingeschraubt. Letzterer ist gegen Drehen, zum Beispiel durch eine Feder 52 gesichert. Wird demnach die Verriegelungsbüchse 34 um einen Winkel y gedreht, erfährt sie relativ zum Ringkolben 28 einen Vorschub:

$$X = (\gamma/360°)P'$$

wobei P' die Steigung des Drehgewindes 50 ist.

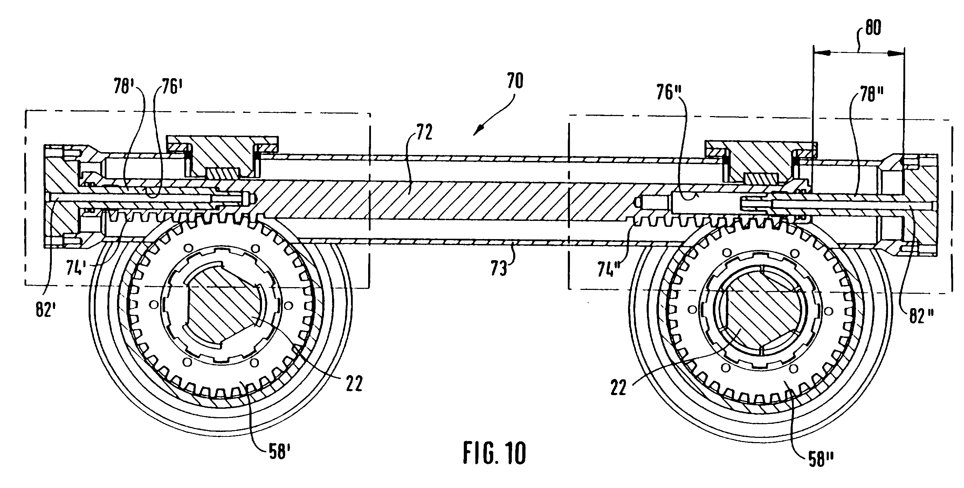

Das Drehen der Verriegelungsbüchse 34 erfolgt über eine Drehvorrichtung 54 welcher in Verlängerung des Kraftzylinders 26 angeordnet ist. Diese Drehvorrichtung 54 umfaßt ein Gehäuse 56, das zum Beispiel an das Gehäuse des Kraftzylinders 26 angeflanscht ist. Im Gehäuse 56 ist eine Zahnbüchse 58 in einem Kugellager 60 drehbar gelagert. Die Zahnbüchse 58 ist auf das freie Ende der Verriegelungsbüchse 34 aufgesteckt und mit diesem Ende über eine Zahn- oder Keilwellenverbindung derart verbunden, daß ein Drehmoment formschlüssig übertragen wird, daß gleichzeitig jedoch ein axiales Verschieben der Verriegelungsbüchse 34 in der Zahnbüchse 58 möglich ist. Die Winkelstellung der Zahnbüchse 58, und damit die Winkelstellung der Verriegelungsbüchse 34, ist über ein Stellantrieb 70 (siehe auch Figur 10), der in die Außenverzahnung 64 der Zahnbüchse 58 eingreift, einstellbar. Es bleibt anzumerken, daß auf die Verriegelungsbüchse 34 ein reines Drehmoment übertragen wird. Sämtliche radialen Kräfte die auf die Zahnbüchse 58 wirken werden von dem Kugellager 60 direkt auf das Gehäuse 56 übertragen. Hierdurch ist gewährleistet, daß das Drehgewinde 50 nicht weiter durch Stellkräfte beansprucht wird.

Figur 10 zeigt eine vorteilhafte Ausgestaltung eines Stellantriebs 70 für je zwei Zahnbüchsen 58' und 58". Dieser Stellantrieb 70 umfaßt eine Zahnstange 72 die mit ihrer Verzahnung 74' in die Zahnbüchse 58' und mit ihrer Verzahnung 74" in die Zahnbüchse 58" eingreifbar ist. Die Zahnstange 72 ist in einem Gehäuserohr 73 untergebracht. In jedem Ende der Zahnstange 72 ist eine Zylinderbohrung 76', 76" ausgeführt. Ein Kolben 78', 78" ist jeweils abgedichtet in die Zylinderbohrung 76', 76" eingeführt. Dieser Kolben ist vorteilhaft als Tauchkolben ausgebildet. Die Kolben 78', 78" sind axial auf die beiden Enden des Gehäuserohrs 73 aufgeflanscht. Die Zahnstange 72 ist zwischen den beiden Kolben 78', 78" axial im Gehäuserohr 73 hin und herschiebbar. In Figur 10 ist die Zahnstange in Anschlag gegen den linken Kolben 78' gezeigt; Pfeil 80 deutet den möglichen Hub der Zahnstange 72 in Richtung des rechten Kolbens 78" an.

Beide Kolben 78', 78", welche ebenfalls eine Führungsfunktion für die Zahnstange 72 haben, weisen einen axialen Anschlußkanal 82', 82" für ein Druckmedium auf. Über diese Anschlußkanäle 82', 82" sind die Zylinderbohrungen 76', 76" hinter dem Kolben 78', 78" wahlweise mit dem Druckmedium beaufschlagbar, so daß zwei entgegengesetzt wirkende Druckzylinder zum Verschieben der Zahnstange 72 ausgebildet werden. Es ist zu beachten, daß diese beiden Druckzylinder direkt über den Zahnbüchsen 58', 58" angeordnet sind. Hierdurch, wird die Baulänge des Stellantriebs auf ein Minimum reduziert. Es ist ebenfalls anzumerken, daß die Stellantriebe derart ausgelegt sind, daß die Zugstangen 22 jeweils aus der ersten Winkelstellung um einen Winkel γ nach rechts und nach links drehbar sind.

Aus Figur 9 ist ersichtlich, daß sowohl an der Einspritzplatte 14, als auch am Gehäuse 56 der Drehvorrichtung 54 für die Verriegelungsbuchsen 34 jeweils eine Führungsvorrichtung 90 für die Zugstange 22 vorgesehen ist. Jede dieser Führungsvorrichtungen 90 umfaßt zum Beispiel drei Gleitschuhe 96. Wie aus Figur 2 ersichtlich sind die drei Längsnuten 42 an den Zugstangen 22 als Führungsflächen für diese Gleitschuhe 96 ausgebildet und über den Stangenabschnitt A verlängert. Die Zugstangen 22 werden durch diese beiden Führungsvorrichtungen 90 in den Verriegelungsbüchsen 34 zentriert.

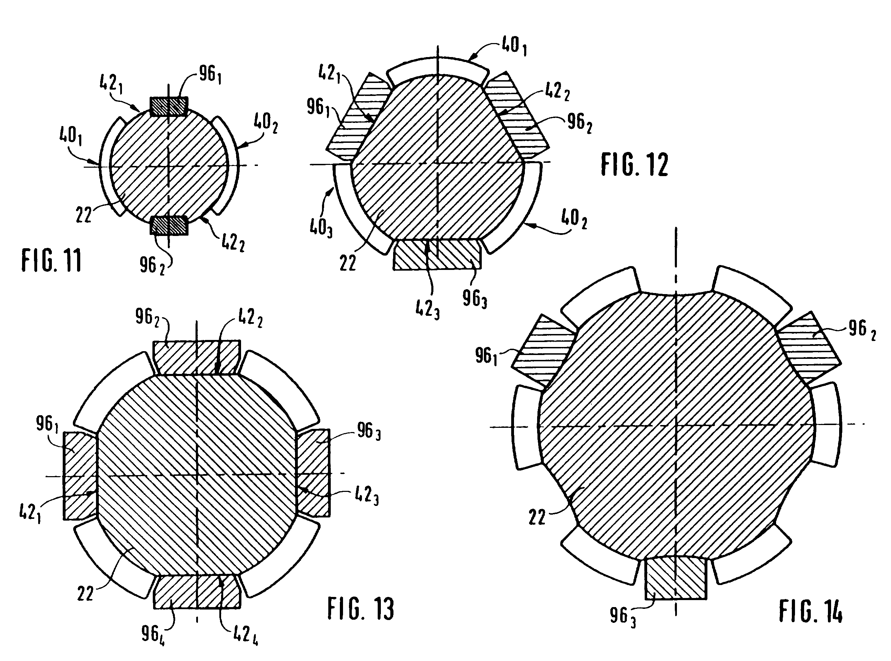

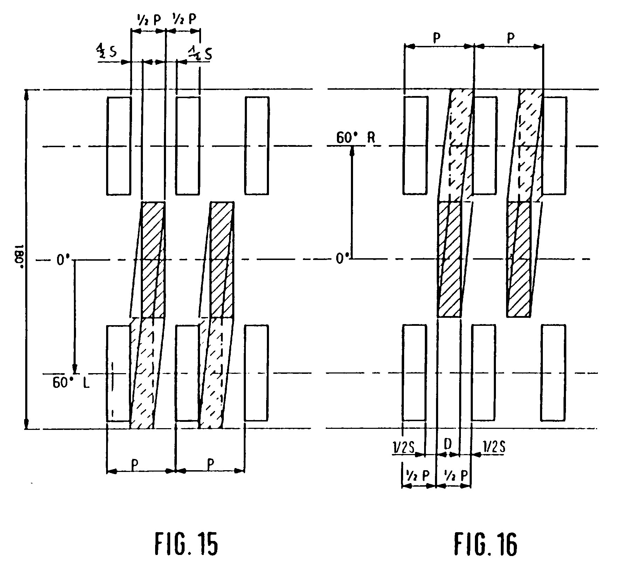

Die Figuren 11 bis 14 zeigen verschiedene Ausführungen einer Zugstange 22, sowie verschiedene Anordnungen der Gleitschuhe 96 und Ausführungen der Führungsflächen für die Gleitschuhe 96. Entsprechend der Ausführungsart der Figur 11, welche für Schließeinheiten mit kleiner Schließkraft geeignet ist, umfaßt die Zugstange 22 zwei Längsnuten $42_1$, $42_2$ welche die Außenverzahnung in zwei Zahnreihen $40_1$, $40_2$ unterteilen. Die Gleitschuhe $96_1$, $96_2$ sind in Führungskanälen in den Längsnuten $42_1$, $42_2$ geführt. Entsprechend Ausführungsart der Figur 12 umfaßt die Zugstange drei Längsnuten $42_1$, $42_2$, $42_3$, welche die Außenverzahnung in drei Zahnziehen $40_1$, $40_2$, $40_3$ unterteilen. Die Führungsflächen für die Gleitschuhe $96_1$, $96_2$, $96_3$ sind als ebene Flächen ausgebildet, welche in einem Winkel von 120° zueinander stehen. Die Ausführung nach Figur 13 unterscheidet sich von der Ausführung nach Figur 12 dadurch, daß die Zugstange 22 vier Führungsflächen $42_1$, $42_2$, $42_3$, $42_4$ aufweist, welche in einem Winkel von 90° zueinander stehen. Entsprechend Figur 14 ist die Außenverzahnung durch sechs Längsnuten in sechs Zahnreihen unterteilt, jedoch nur jede zweite Längsnut ist als Führungsfläche für einen Gleitschuh $96_1$, $96_2$, $96_3$ ausgebildet. Es ist selbstverständlich, daß größere Schließeinheiten mehr Zahnreihen und Gleitschuhe, als kleinere Schließeinheiten benötigen.

Anhand der Figuren 15 bis 20 wird die Auslegung der Steigung des Gewindes 50 zur Aufnahme des axialen Flankenspiels S näher erläutert. Diese Figuren zeigen jeweils eine 180° Abwicklung der Außen- und Innenverzahnung nach Figur 3 und 4. Man sieht zwei der drei Zahnreihen der Außenverzahnung der Zugstange 22 und eine der drei Zahnreihen der Innenverzahnung der Verriegelungsbüchse 34. Die Zähne der Innenverzahnung sind schraffiert. Folgende Bezeichnungen werden in den Zeichnungen verwendet:

P:   Teilung/Steigung der Außenverzahnung an der Zugstange 22, beziehungsweise der Innenverzahnung an der Verriegelungsbüchse 34;

D:   Mittlere Zahnbreite;

S:   axiales Flankenspiel zwischen Innenverzahnung und Außenverzahnung;

P':   Steigung des Drehgewindes 50 zwischen Zugstange 22 und Kolben 28.

Die Figuren 15, 17 und 19 zeigen jeweils die Position der Innenverzahnung vor und nach einer 60°-Drehung der Verriegelungsbüchse 34 nach links. Vor der 60°-Drehung liegen die Zähne der Innenverzahnung in erster Winkelstellung in den Längsnuten zwischen den Zahnreihen der Außenverzahnung. Nach dieser 60°-Drehung nach links liegen die Zähne der Innenverzahnung in zweiter Winkelstellung mit ihrer linken Flanke an den Zähnen der Außenverzahnung an und können spielfrei eine Kraft nach links von der Verriegelungsbüchse auf die Zugstange übertragen. Die Figuren 16, 18 und 20 zeigen jeweils die Position der Innenverzahnung vor und nach einem Drehen der Verriegelungsbüchse um einen Winkel von 60° nach rechts. Vor der 60°-Drehung liegen die Zähne der Innenverzahnung in erster Winkelstellung in den Längsnuten zwischen den Zahnreihen der Außenverzahnung. Nach dieser 60°-Drehung nach rechts liegen die Zähne der Innenverzahnung in zweiter Winkelstellung mit ihrer rechten Flanke an den Zähnen der Außenverzahnung an und können spielfrei eine Kraft nach rechts von der Verriegelungsbüchse auf die Zugstange übertragen.

Zwecks Auslegung der Steigung des Gewindes 50 zur Aufnahme des axialen Flankenspiels S wird davon ausgegangen, daß in Ausgangsstellung vor dem Drehen der Verriegelungsbüchse, die Zahnreihen der Innenverzahnung jeweils winkelmäßig genau in der Mitte zwischen den Zahnreihen der Außenverzahnung stehen und daß das axiale Flankenspiel S zwischen Innen- und Außenverzahnung beidseitig gleich verteilt ist.

Im allgemeinen Fall ist die Steigung des Drehgewindes derart auszulegen, daß durch Drehen der Verriegelungsbüchse von der ersten Winkelstellung in die zweite Winkelstellung, das vorhandene Flankenspiel S zwischen Innen- und Außenverzahnung einseitig verteilt wird, derart daß zwischen den Zahnflanken die die Kraft übertragen sollen kein wesentliches Flankenspiel mehr besteht.

Figuren 15 und 16 beziehen sich auf den Fall einer ringförmigen Verzahnung. Die Steigung des Drehgewindes 50 ist derart auszulegen, daß durch Drehen der Verriegelungsbüchse von der ersten Winkelstellung in die zweite Winkelstellung, der Vorschub der Verriegelungsbüchse ungefähr der Hälfte des Flankenspiels S zwischen Innen- und Außenverzahnung entspricht, d. h.:

$$P'/6 = 0.5S \text{ oder } P' = 3S;$$

für den Spezialfall S = 0.5D, das heißt S = P/5, ergibt sich demgemäß:

$$P' = 0{,}6P.$$

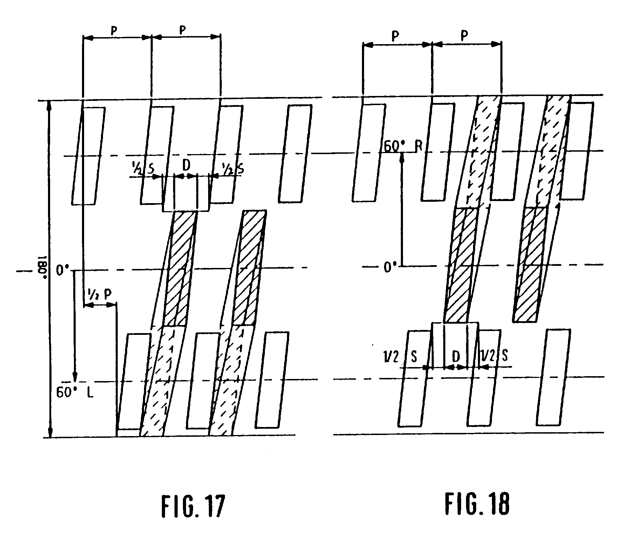

Figuren 17 und 18 beziehen sich auf den Fall einer schraubenförmigen Verzahnung die in Drehrichtung der Verriegelungsbüchse in Richtung der zu übertragenden Kraft ansteigend ist. Geht man davon aus, daß die Steigung P' des Drehgewindes ebenfalls in Drehrichtung der Verriegelungsbüchse in Richtung der zu übertragenden Kraft ansteigend ist, so muß der Vorschub der Verriegelungsbüchse ungefähr der Hälfte des Flankenspiels S zwischen Innen- und Außenverzahnung plus einem Sechstel der Steigung P der Verzahnung entsprechen, das heißt:

$$P'/6 = 0.5S + P/6 \text{ oder } P' = 3S + P.$$

Für den Spezialfall : S = P/5, das heißt S = 0.5D, ergibt sich demgemäß:

$$P' = 1{,}6P.$$

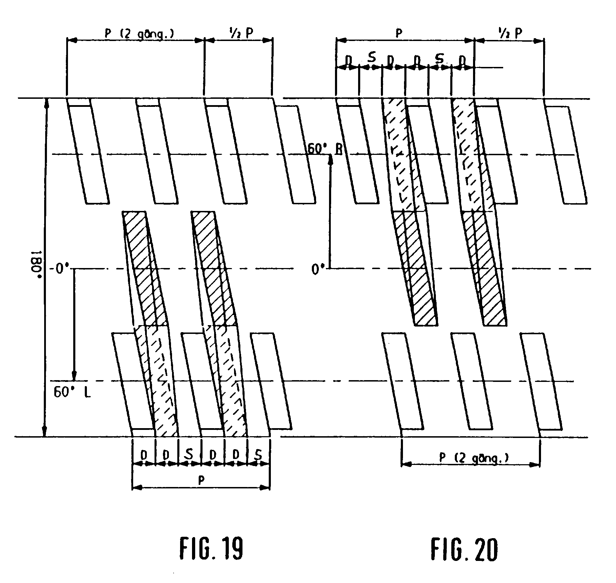

Figuren 19 und 20 beziehen sich auf den Fall einer schraubenförmigen Verzahnung die in Drehrichtung der Verriegelungsbüchse in Richtung der zu übertragenden Kraft eine negative Steigung aufweist. Weiterhin ist in den Figuren 19 und 20 die Verzahnung zweigängig ausgebildet, das heißt daß S = 0,5P - 2D. Geht man davon aus, daß die Steigung P' des Drehgewindes eine positive Steigung aufweist muß der Vorschub X der Verriegelungsbüchse ungefähr der Hälfte des Flankenspiels S zwischen Innen- und Außenverzahnung minus einem Sechstel der Steigung P der Verzahnung entsprechen, das heißt:

$$P'/6 = 0.5S - P/6 \text{ oder } P' = 3S-P;$$

für den Spezialfall S= P/10, das heißt D= P/5, ergibt sich:

$$P' = -0.7P.$$

Das Minuszeichen bedeutet in diesem Fall, daß das Drehgewinde 50 ebenfalls eine negative Steigung aufweisen muß.

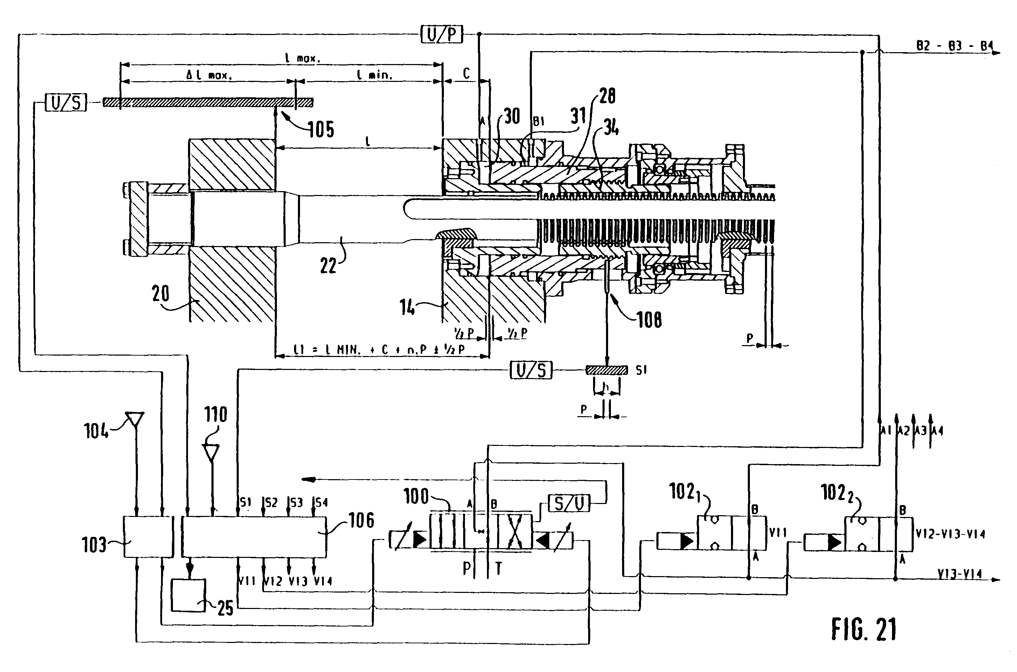

Figur 21 zeigt ein Blockschema der hydraulischen Steuerung der Schließeinheit 10. Ein 4/3-Wege-Proportionalventil 100 ist mit seinem ersten Arbeitsausgang A jeweils über ein 2/2-Wege-Schaltventil $102_1$, $102_2$, ... mit der ersten Druckkammer 30 eines jeden der vier Kraftzylinder 28 verbunden. Das 4/3-Wege-Proportionalventil 100, das durch einen Regler 103 angesteuert wird, regelt über seinen Arbeitsausgang A beim Schließvorgang den Schließdruck in der ersten Druckkammer 30 der vier Kraftzylinder 26 in Funktion einer Schließkraftvorgabe 104. Der Arbeitsausgang B des 4/3-Wege-Proportionalventils 100 ist direkt mit der zweiten Druckkammer 31 eines jeden der vier Kraftzylinder 26 verbunden.

Die Schließplatte 20 ist mit einem Positionsaufnehmer 105 versehen der mit einem Achsenregler 106 verbunden ist. Dem Kolben 28 jedes Kraftzylinders 26 ist ein Positionsaufnehmer 108 zugeordnet. Die Ausgangssignale S1, S2, S3, S4 dieser Positionsaufnehmer 108 sind ebenfalls Eingangsgrößen des Achsenreglers 106. Die Referenzzahl 110 zeigt eine Eingabeeinheit für die Länge "I" der Spritzform, das heißt den axialen Abstand zwischen Schließplatte 20 und Einspritzplatte 14. Diese Länge "I" wird durch den Achsenregler 106 über seinen Ausgang 112 eingestellt, indem letzterer die zwei Verschiebezylinder 25 ansteuert.

Vor der Drehung der Verriegelungsbüchse 34 von der ersten in die zweite Winkelstellung sollen die Zähne der Innenverzahnung axial genau zwischen den Zähnen der Außenverzahnung der Verriegelungsbüchse 34 positioniert sein, um beim Drehen der Verriegelungsbuchse 34 in die zweite Winkelstellung ein einwandfreies Eingreifen der Innenverzahnung in die Außenverzahnung zu ermöglichen. Um diese axiale Positionierung der Verzahnungen unabhängig von der eingestellten Länge "I" zu ermöglichen, wird die Ruhestellung der Kolbens 28 in Funktion der eingestellten Länge "I" hydraulisch in einem Intervall [-0.5P; +0.5P] um eine vorgegebene Referenzstellung festgelegt. In anderen Worten, die Verriegelungsbüchse 34 wird axial um einen Betrag y, wobei - 0.5P < y < + 0.5P, relativ zu einem Referenzpunkt verschoben. Sämtliche Ist-Positionen der vier Kolben 28 werden hierzu im Achsenregler 106 mit der errechneten Soll-Position verglichen. Der Achsenregler 106 steuert über die Ausgänge V11, V12, V13, V14 die 2/2-Wege-Schaltventile an Entspricht die gemessene Ist-Position eines Kolbens 28 der vorgegebenen Soll-Position, wird das entsprechende 2/2-Wegeventil 102 zugefahren. Diese Regelung erlaubt mit geringem Aufwand ein kontinuierliches Einstellen der Länge "I", unabhängig von der Teilung oder Steigung der Innen- und Außenverzahnung. Es wird darauf hingewiesen, daß nur ein Proportionalventil für die vorbeschriebene Regelung gebraucht wird.

**Patentansprüche**

1. Schließeinheit einer Spritzgießmaschine, umfassend

   eine bewegliche Schließplatte (20) und eine feststehende Gegenplatte (14) welche Aufspannplatten für eine Spritzgießform ausbilden,
   eine Verschiebevorrichtung für die bewegliche Schließplatte, zum Positionieren dieser beweglichen Schließplatte (20) relativ zur Gegenplatte (14), mehrere hydraulische Kraftzylinder (26) an der feststehenden Gegenplatte (14) zum Erzeugen der Schließkraft, wobei die Schließplatte (20) pro Kraftzylinder (26) je eine Zugstange (22) zum Übertragen einer Schließkraft vom Kolben des Kraftzylinders (26) auf die bewegliche Schließplatte (20) aufweist,

   **gekennzeichnet durch**,

   Verriegelungsbüchsen (34) an der Gegenplatte (14) die um ihre Achse drehbar sind und die jeweils mit dem Kolben (28) eines Kraftzylinders (26) mechanisch verbunden sind, wobei die Zugstangen (22) die hydraulischen Kraftzylinder (26) und die Verriegelungsbüchsen (34) axial durchqueren,
   einen Stellantrieb (70) zum Drehen der Verriegelungsbüchsen (34) in eine erste und zweite Winkelstellung,
   erste Verriegelungsmittel (38) längs einem Stangenabschnitt A an den Zugstangen (22) und zweite Verriegelungsmittel (36) in der Verriegelungsbüchse (34),
   wobei diese ersten und zweiten Verriegelungsmittel (38, 36)derart komplementär ausgebildet sind, daß sie in der ersten Winkelstellung ein axiales Durchschieben der Zugstangen (22) durch die hydraulischen Kraftzylinder (26) und die Verriegelungsbüchsen (34) ermöglichen, und daß in der zweiten Winkelstellung die ersten Verriegelungsmittel (38) im Stangenabschnitt A an den Zugstangen (22) mit den zweiten Verriegelungsmittel (36) der Verriegelungsbüchsen (34) zum Übertragen der erforderlichen Schließkraft zusammenwirken.

2.	Schließeinheit nach Anspruch 1, dadurch gekennzeichnet, daß die ersten Verriegelungsmittel (38) eine Außenverzahnung (38) an der Zugstange, und die zweiten Verriegelungsmittel (36) eine Innenverzahnung (36) an der Verriegelungsbüchse (34) umfassen,
wobei Innenverzahnung (36) und Außenverzahnung durch Längsnuten in mindestens zwei Zahnreihen unterteilt sind, derart daß in der ersten Winkelstellung die Zahnreihen der Außenverzahnung (38) durch Längsnuten der Innenverzahnung (36) und die Zahnreihen der Innenverzahnung (36) durch die Längsnuten der Außenverzahnung (38) axial durchführbar sind und somit ein axiales Durchschieben der Zugstangen (22) durch die hydraulischen Kraftzylinder (26) und die Verriegelungsbüchsen (34) ermöglichen, und daß in der zweiten Winkelstellung die Zähne der Innenverzahnung (36) hinter den Zähnen der Außenverzahnung (38) zum Übertragen einer Zugkraft eingreifbar sind.

3.	Schließeinheit nach Anspruch 2, dadurch gekennzeichnet, daß zwischen Außenverzahnung (38) und Innenverzahnung (36) ein axiales Flankenspiel S besteht das ungefähr der Hälfte der mittleren Breite eines Zahns entspricht.

4.	Schließeinheit nach Anspruch 2 oder 3, dadurch gekennzeichnet, daß die Zähne der Innenverzahnung (36) und die Zähne der Außenverzahnung (38) ringförmig angeordnet sind.

5.	Schließeinheit nach Anspruch 2 oder 3, dadurch gekennzeichnet, daß die Zähne der Innenverzahnung (36) und die Zähne der Außenverzahnung (38) schraubenförmig angeordnet sind.

6.	Schließeinheit nach einem der Ansprüche 2 bis 5, dadurch gekennzeichnet, daß die Zähne der Innenverzahnung (36) und die Zähne der Außenverzahnung (38) einen trapezförmigen Querschnitt haben.

7.	Schließeinheit nach einem der Ansprüche 2 bis 6, dadurch gekennzeichnet, daß der Kolben (28) des hydraulischen Kraftzylinders (26) über ein Drehgewinde (50) mit der Verriegelungsbüchse (34) verbunden ist, wobei der Kolben (28) gegen Drehen gesichert ist, so daß durch Drehen der Verriegelungsbüchse (34) um einen Winkel y von der ersten Winkelstellung in die zweite Winkelstellung die Zugstange (22) einen Vorschub relativ zum Kolben (28) erfährt.

8.	Schließeinheit nach Anspruch 7, dadurch gekennzeichnet, daß der Stellantrieb (70) zum Drehen der Verriegelungsbüchsen (34) beidseitig zur ersten Winkelstellung ausgelegt ist, wobei die Verriegelungsbüchsen (34) jeweils einen Vorschub in Schließrichtung, beziehungsweise in Öffnungsrichtung erfahren.

9.	Schließeinheit nach Anspruch 7 oder 8, dadurch gekennzeichnet, daß die Steigung des Drehgewindes (50) derart ausgelegt ist, daß durch Drehen der Verriegelungsbüchse (34) aus der ersten Winkelstellung in die zweite Winkelstellung, das vorhandene Flankenspiel S zwischen Innen- und Außenverzahnung (36, 38) einseitig verteilt wird, derart daß zwischen den Zahnflanken die die Kraft übertragen sollen kein wesentliches Flankenspiel mehr besteht.

10.	Schließeinheit nach Anspruch 7, 8 oder 9, wobei die Zähne der Innen- und Außenverzahnung (36, 38) ringförmig angeordnet sind, dadurch gekennzeichnet, daß die Steigung des Drehgewindes (50) derart ausgelegt ist, daß durch Drehen der Verriegelungsbüchse (34) von der ersten Winkelstellung in die zweite Winkelstellung, der Vorschub der Verriegelungsbüchse (34) ungefähr der Hälfte des Flankenspiels S zwischen Innen- und Außenverzahnung (36, 38) entspricht.

11.	Schließeinheit nach Anspruch 7, 8 oder 9, wobei die Zähne der Innen- und Außenverzahnung (36, 38) ein Gewinde ausbilden das in Drehrichtung eine positive Steigung P in Richtung der zu übertragenden Kraft aufweist, dadurch gekennzeichnet, daß die Steigung des Drehgewindes (50) derart ausgelegt ist, daß durch Drehen der Verriegelungsbüchse (34) um einen Winkel $\gamma$ von der ersten Winkelstellung in die zweite Winkelstellung, der Vorschub der Verriegelungsbüchse (34) ungefähr der Hälfte des Flankenspiels S zwischen Innen- und Außenverzahnung (36, 38) plus $(\gamma/360°)P$ entspricht.

12.	Schließeinheit nach Anspruch 7, 8 oder 9, wobei die Zähne der Innen- und Außenverzahnung (36, 38) ein Gewinde ausbilden das in Drehrichtung eine negative Steigung P in Richtung der zu übertragenden Kraft aufweist, dadurch gekennzeichnet, daß die Steigung des Drehgewindes (50) derart ausgelegt ist, daß durch Drehen der Verriegelungsbüchse (34) von der ersten Winkelstellung in die zweite Winkelstellung, der Vorschub der Verriegelungsbüchse (34) ungefähr der Hälfte des Flankenspiels S zwischen Innen- und Außenverzahnung (36, 38) minus $(\gamma/360°)P$ entspricht.

13.	Schließeinheit nach Anspruch 11 oder 12, wobei das Gewinde der Innen- und Außenverzahnung (36, 38) doppelgängig ausgebildet ist.

14. Schließeinheit nach einem der Ansprüche 1 bis 13, dadurch gekennzeichnet, daß die Verriegelungsbüchse (34) derart an dem Kolben (28) des Kraftzylinders (26) angebracht ist, daß sie bei Übertragung der Schließkraft unter Zugspannung steht.

15. Schließeinheit nach Anspruch 14, dadurch gekennzeichnet, daß die Zugstange (22) eine um zirka 20% höhere Streckgrenze als die Verriegelungsbüchse (34) aufweist, wobei Zugstange (22) und Verriegelungsbüchse (34) derart ausgelegt sind, daß die maximale Zugspannungen bei Übertragung der Schließkraft ungefähr gleich sind.

16. Schließeinheit nach Anspruch 14 oder 15, dadurch gekennzeichnet, daß die Länge der Basis eines Zahns der Innenverzahnung (36) gleich der Länge der Basis eines Zahns der Außenverzahnung (38) ist.

17. Schließeinheit nach Anspruch 14, 15 oder 16, dadurch gekennzeichnet, daß die Zähne der Innenverzahnung (36) eine kleinere Flankenfläche als die Zähne der Außenverzahnung (38) aufweisen, und die Zähne der Außenverzahnung (38) eine größere Härte als die Zähne der Innenverzahnung (36) aufweisen.

18. Schließeinheit nach einem der Ansprüche 2 bis 17, dadurch gekennzeichnet, daß an der Gegenplatte (14) Gleitschuhe (96) als radiale Führung für die Zugstangen (22) angebracht sind, wobei die Längsnuten in der Außenverzahnung (38) der Zugstangen (22) als Führungsflächen für diese Gleitschuhe (96) ausgebildet sind und diese Führungsflächen über den Stangenabschnitt A mit der Außenverzahnung (38) hinaus verlängert sind.

19. Schließeinheit nach Anspruch 16, 17 oder 18, dadurch gekennzeichnet, daß eine Zugstangendurchführung in der Gegenplatte (14) in axialer Richtung wie folgt aufgebaut ist:

   a) ein Ringsegment mit Gleitschuhen (96) eintrittseitig;
   b) ein ringförmigen Kraftzylinder (26);
   c) eine drehbar gelagerte Verriegelungsbüchse (34);
   d) eine Drehvorrichtung (70) zum Drehen der Verriegelungsbüchse (34) in die erste, respektiv zweite Winkelstellung; und
   e) ein Ringsegment mit Gleitschuhen (96) austrittseitig.

20. Schließeinheit nach einem der Ansprüche 1 bis 19, dadurch gekennzeichnet, daß der Stellantrieb (70) jeweils eine gemeinsame Zahnstange (72) für je zwei Verriegelungsbüchsen (34) aufweist.

21. Schließeinheit nach Anspruch 21, dadurch gekennzeichnet,

   daß die Zahnstange (72) in jedem Ende eine Zylinderbohrung (76', 76") aufweist,
   daß in die zwei Zylinderbohrungen (76', 76") jeweils ein feststehender Kolben (78', 78") abgedichtet eingeführt ist, so daß die Zahnstange, zwischen den beiden feststehenden Kolben (78', 78") axial hin- und herschiebbar ist, und
   daß die beiden Zylinderbohrungen (76', 76") hinter den Kolben (78', 78") mit einem Druckmedium beaufschlagbar sind, so daß zwei entgegengesetzt wirkende Druckzylinder zum Verschieben der Zahnstange (72) ausgebildet werden.

22. Schließeinheit nach Anspruch 22, dadurch gekennzeichnet, daß jeder Kolben (78', 78") einen axialen Anschlußkanal (82', 82") für ein Druckmedium aufweist.

23. Schließeinheit nach Anspruch 21, 22 oder 23, gekennzeichnet durch eine Antriebsbuchse (58', 58") mit Außenverzahnung (38) welche in die Zähne der Zahnstange (72) formschlüssig eingreifen, wobei die Antriebsbüchse (58', 58") in einem Gehäuse drehbar gelagert ist und eine Öffnung zum axialen Einführen der Verriegelungsbüchse (34) aufweist, und durch Kupplungsmittel zum formschlüssigen Übertragen eines Drehmoments von der Antriebsbüchse (58', 58") auf die in die Antriebsbüchse (58', 58") eingeführte Verriegelungsbüchse (34), wobei diese Kupplungsmittel derart ausgebildet sind, daß sie ein axiales Verschieben der Verriegelungsbüchse (34) in der Antriebsbüchse (58', 58") ermöglichen.

24. Schließeinheit nach Anspruch 24, dadurch gekennzeichnet, daß die Kupplungsmittel als Zahn- oder Keilwellenverbindung ausgeführt sind.

25. Schließeinheit nach einem der Ansprüche 1 bis 25, dadurch gekennzeichnet, daß die Kraftzylinder (26) als doppelt wirkende ringförmige Druckzylinder, mit jeweils einer ersten Druckkammer (30) zum Zuhalten der Spritzform und einer zweiten Druckkammer (31) zum Öffnen der Spritzform ausgebildet sind.

26. Schließeinheit nach Anspruch 26, gekennzeichnet durch ein 4/3-Wege-Proportionalventil (100) mit einem ersten und zweiten Arbeitsausgang, wobei der erste Arbeitsausgang über die 2/2-Wege-Ventile (102) mit den ersten Druckkammern (30) sämtlicher Kraftzylinder (26) verbunden ist und der zweite Ar

beitsausgang mit den zweiten Druckkammern (31) sämtlicher Kraftzylinder (26) verbunden ist.

27. Schließeinheit nach einem der Ansprüche 2 bis 27, gekennzeichnet durch einen Positionsaufnehmer (108) für die Ist-Position des Kolbens (28) jedes Kraftzylinders (26),

> ein 2/2-Wegeventil (102) für jeden Kraftzylinder (26),
> eine Steuereinheit (106) welche das 2/2-Wegeventil (102) schließt wenn die Ist-Position des Kolbens (28) einer vorgegebenen Soll-Position entspricht.

28. Schließeinheit nach einem der Ansprüche 2 bis 28, gekennzeichnet durch eine Steuereinheit (106) zum axialen Positionieren der Kolben (28) der Kraftzylinder (26) in einer Ruhestellung die derart berechnet ist, daß beim Drehen der Verriegelungsbüchsen (34) aus der ersten Winkelstellung in die zweite Winkelstellung, die Zähne der Innenverzahnung (36) axial zwischen den Zähnen der Außenverzahnung (38) liegen.

29. Schließeinheit nach einem der Ansprüche 2 bis 29, gekennzeichnet durch einen Positionsaufnehmer für die Schließplatte (20),

> einen Positionsaufnehmer (108) für die Ist-Position des Kolbens (28) eines jeden Kraftzylinders (26),
> eine Recheneinheit zum Berechnen einer Ruhestellung der Kolben (28) in Funktion der gemessenen Position der Schließplatte (20), derart daß vor dem Einrenken der Innenverzahnung (36) der Verriegelungsbüchsen (34) in die Außenverzahnung (38) der Zugstangen (22), die Zähne der Innenverzahnung (36) axial zwischen den Zähnen der Außenverzahnung (38) liegen, und
> eine Steuereinheit (106) mit den Meßwerten der Positionsaufnehmer der Kolben (28) als Eingangssignale, zum Positionieren der Kolben (28) in die berechnete Ruhestellung.

## Claims

1. A clamping unit of an injection moulding machine, comprising a movable clamping plate (20) and a fixed counterplate (14) which form mounting plates for an injection mould, a shifting apparatus for the movable clamping plate for positioning said movable clamping plate (20) relative to the counterplate (14), several hydraulic force cyclinders (26) on the fixed counterplate (14) to produce the mould clamping force, with the clamping plate (20) having a pull rod (22) for each hydraulic force cylinder (26) for transmitting the mould clamping force from the piston of the hydraulic force cylinder (26) onto the movable clamping plate (20), characterized by locking bushes (34) on the counterplate (14) which are rotatable about their axis and are each mechanically connected with the piston (28) of a hydraulic force cylinder (26), with the pull rods (22) axially passing through the hydraulic force cylinders (26) and the locking bushes (34), an actuating drive (70) for rotating the locking bushes (34) to a first and second angular position, first locking means (38) along a rod section A on the pull rods (22) and second locking means (36) in the locking bush (34), with said first and second locking means (38, 36) being arranged in a complementary manner in such a way that in the first angular positition they allow the axial pushing through of the pull rods (22) through the hydraulic force cylinder (26) and the locking bushes (34) and that in the second angular position the first locking means (38) in the rod section A on the pull rods (22) cooperate with the second locking means (36) of the locking bushes (34) for transmitting the required mould clamping force.

2. A clamping unit as claimed in claim 1, characterized in that the first locking means (38) comprise an external toothing (38) on the pull rod and the second locking means (36) an internal toothing (36) on the locking bush (34), with the internal toothing (36) and the external toothing being subdivided by longitudinal grooves into at least two rows of teeth, such that in the first angular position the rows of teeth of the external toothing (38) can be axially guided through longitudinal grooves of the internal toothing (36) and the rows of teeth of the internal toothing (36) through the longitudinal grooves of the external toothing (38) and thus allow axially pushing the pull rods (22) through the hydraulic force cylinders (26) and the locking bushes (34) and that in the second angular position the teeth of the internal toothing (36) are engageable behind the teeth of the external toothing (38) for transmitting a tensile force.

3. A clamping unit as claimed in claim 2, characterized in that there is an axial face backlash S between the external toothing (38) and the internal toothing (36) which corresponds approximately to half the mean width of a tooth.

4. A clamping unit as claimed in claim 2 or 3, characterized in that the teeth of the internal toothing (36) and the teeth of the external toothing (38) are arranged in an annular way.

5. A clamping unit as claimed in claim 2 or 3, characterized in that the teeth of the internal toothing (36) and the teeth of the external toothing (38) are arranged in a helical manner.

6. A clamping unit as claimed in one of the claims 2 to 5, characterized in that the teeth of the internal toothing (36) and the teeth of the external toothing (38) have a trapezoid cross section.

7. A clamping unit as claimed in one of the claims 2 to 6, characterized in that the piston (28) of the hydraulic force cylinder (26) is connected with the locking bush (34) by way of a turning thread (50), with the piston (28) being secured against turning so that by turning the locking bush (34) about an angle $\gamma$ from the first angular position to the second angular position the pull rod (22) is subjected to an advance motion relative to the piston (28).

8. A clamping unit as claimed in claim 7, characterized in that the actuating drive (70) for rotating the locking bushes (34) is designed on both sides towards the first angular position, with the locking bushes (34) being subjected to an advance motion in the closing direction or opening direction.

9. A clamping unit as claimed in claim 7 or 8, characterized in that the lead of the turning thread (50) is arranged in such a way that by turning the locking bush (34) from the first angular position to the second angular position the present face backlash S between the internal and external toothing (36, 38) is distributed on one side, such that there is no substantial face backlash anymore between the faces of the teeth which are to transmit the force.

10. A clamping unit as claimed in claim 7, 8 or 9, with the teeth of the internal and external toothing (36, 38) being arranged in an annular manner, characterized in that the lead of the turning thread (50) is arranged in such a way that by turning the locking bush (34) from the first angular position to the second angular position the advance motion of the locking bush (34) corresponds to approximately half the face backlash S between the internal and external toothing (36, 38).

11. A clamping unit as claimed in claim 7, 8 or 9, with the teeth of the internal or external toothing (36, 38) forming a thread which in the turning direction is provided with a positive lead P in the direction of the force to be transmitted, characterized in that the lead of the turning thread (50) is arranged in such a way that by turning the locking bush about an angle $\gamma$ from the first angular position to the second angular position the advance motion of the locking bush (34) corresponds to approximately half the face backlash S between the internal and external toothing (36, 38) plus $(\gamma/360°)P$.

12. A clamping unit as claimed in claim 7, 8 or 9, with the teeth of the internal and external toothing (36, 38) forming a thread which in the turning direction is provided with a negative lead P in the direction of the force to be transmitted, characterized in that the lead of the turning thread (50) is arranged in such a way that by turning the locking bush (34) from the first angular position to the second angular position the advance motion of the locking bush (34) corresponds to approximately half the face backlash S between the internal and external toothing (36, 38) minus $(\gamma/360°)P$.

13. A clamping unit as claimed in claim 11 or 12, with the thread of the internal and external toothing (36, 38) being arranged in a double thread.

14. A clamping unit as claimed in one of the claims 1 to 13, characterized in that the locking bush (34) is fastened to the piston (28) of the hydraulic force cylinder (26) in such a way that it is under a tensile stress during the transmission of the mould clamping force.

15. A clamping unit as claimed in claim 14, characterized in that the pull rod (22) is provided with an approx. 20% higher apparent yielding point than the locking bush (34), with the pull rod (22) and the locking bush (34) being arranged in such a way that the maximum tensile stresses are approximately the same during the transmission of the mould clamping force.

16. A clamping unit as claimed in claim 14 or 15, characterized in that the length of the base of a tooth of the internal toothing (36) is equal to the length of the base of a tooth of the external toothing (38).

17. A clamping unit as claimed in claim 14, 15 or 16, characterized in that the teeth of the internal toothing (36) have a smaller face surface area than the teeth of the external toothing (38) and the teeth of the external toothing (38) have a higher hardness than the teeth of the internal toothing (36).

18. A clamping unit as claimed in one of the claims 2 to 17, characterized in that sliding blocks (96) are attached on the counterplate (14) as radial guide means for the pull rods (22), with the longitudinal grooves in the external toothing (38) of the pull rods (22) being arranged as guide surfaces for said sliding blocks (96) and said guide surfaces being extended beyond the rod section A with the external toothing (38).

19. A clamping unit as claimed in claim 16, 17 or 18, characterized in that a pull rod leadthrough is arranged in the counterplate (14) in the axial direction as follows:

    a) an annular segment with sliding blocks (96) on the inlet side;
    b) an annular hydraulic force cylinder (26);
    c) rotatably held locking bush (34);
    d) a rotating apparatus (70) for rotating the locking bush (34) to the first and second angular position, respectively; and
    e) an annular segment with sliding blocks (96) on the outlet side.

20. A clamping unit as claimed in one of the claims 1 to 19, characterized in that the actuating drive (70) is provided with a common toothed rod (72) for two locking bushes (34) each.

21. A clamping unit as claimed in claim 20, characterized in that the toothed rod (72) is provided at each end with a cylindrical bore (76', 76"),

    a fixed piston (78', 78") is introduced in a sealed manner into the two cylinder bores (76', 76"), so that the toothed rod is axially reciprocatable between the two fixed pistons (78', 78"), and the two cylinder bores (76', 76") can be pressurized with a pressure medium behind the pistons (78', 78") so that two oppositely acting pressure cylinders are formed for displacing the toothed rod (72).

22. A clamping unit as claimed in claim 21, characterized in that each piston (78', 78") is provided with an axial connecting duct (82', 82") for a pressure medium.

23. A clamping unit as claimed in claim 21 or 22, characterized by a drive bush (58', 58") with external toothing (38) which engages into the teeth of the toothed rod (72) in a positive locking way, with the drive bush (58', 58") being rotatably held in a housing and having an opening for the axial insertion of the locking bush (34), and by coupling means for interlocked transmission of torque from the drive bush (58', 58") to the locking bush (34) which is inserted in the drive bush (58', 58"), with said coupling means being arranged in such a way that they allow an axial displacement of the locking bush (34) in the drive bush (58', 58").

24. A clamping unit as claimed in claim 23, characterized in that the coupling means are arranged as an involute spline or splined shaft connection.

25. A clamping unit as claimed in one of the claims 1 to 24, characterized in that the hydraulic force cylinders (26) are arranged as double-action annular pressure cylinders with a first pressure chamber (30) for keeping the injection mould closed and a second pressure chamber (31) for opening the injection mould.

26. A clamping unit as claimed in claim 25, characterized by a 4/3 directional-control proportional-action valve (100) with a first and second working output, with the first working output being connected by way of the 2/2 directional-control valves (102) with the first pressure chambers (30) of all hydraulic force cylinders (26) and the second working output being connected with the second pressure chambers (31) of all hydraulic force cylinders (26).

27. A clamping unit as claimed in one of the claims 2 to 26, characterized by a position sensor (108) for the actual position of the piston (28) of each hydraulic force cylinder (26), a 2/2 directional-control valve (102) for each hydraulic force cylinder (26), a control unit (106) which closes the 2/2 directional-control valve (102) when the actual position of the piston (28) corresponds to a predetermined setpoint position.

28. A clamping unit as claimed in one of the claims 2 to 27, characterized by a control unit (106) for the axial positioning of the piston (28) of the hydraulic force cylinder (26) in an idle position which is calculated in such a way that the teeth of the internal toothing (36) are disposed axially between the teeth of the external toothing (38) during the rotation of the locking bushes (34) from the first angular position to the second angular position.

29. A clamping unit as claimed in one of the claims 2 to 28, characterized by a position sensor for the clamping plate (20), a position sensor (108) for the actual position of the piston (28) of each hydraulic force cylinder (26), a computer unit for calculating an idle position of the pistons (28) in function of the measured position of the clamping plate (20), namely in such a way that the teeth of the internal toothing (36) are disposed axially between the teeth of the external toothing (38) prior to the engagement of the internal toothing (36) of the locking bushes (34) in the external toothing (38) of the pull rods (22), and a control unit (106) with the measured values of the position sensors of the pistons (28) as input signals for positioning the pistons (28) in the calculated idle position.

## Revendications

1. Unité de fermeture pour une machine de moulage par injection, comprenant :

    une plaque de fermeture mobile (20) et une contre-plaque fixe (14) qui forment des plaques de serrage pour un moule de moulage par injection, un dispositif de translation pour la plaque de fermeture mobile, destiné à positionner cette plaque de fermeture mobile (20) par rapport à la contre-plaque (14),

plusieurs vérins hydrauliques (26) sur la contre-plaque fixe (14) destinés à produire la force de fermeture, la plaque de fermeture (20) présentant pour chaque vérin (26) une barre de traction (22) destinée à transmettre une force de fermeture du piston du vérin (26) à la plaque de fermeture mobile (20),

caractérisée en ce qu'elle comporte :

des douilles de verrouillage (34) sur la contre-plaque (14) qui tournent autour de leur axe et dont chacune est reliée mécaniquement au piston (28) d'un vérin (26), les barres de traction (22) traversant axialement les vérins hydrauliques (26) et les douilles de verrouillage (34),

un entraînement de positionnement (70) destiné à faire tourner les douilles de verrouillage (34) dans une première position angulaire et une seconde,

des premiers moyens de verrouillage (38) le long d'un segment A des barres de traction (22) et des seconds moyens de verrouillage (36) dans la douille de verrouillage (34),

les premiers et seconds moyens de verrouillage (38, 36) étant complémentaires de telle sorte que dans la première position angulaire, ils permettent une translation axiale des barres de traction (22) à travers les vérins hydrauliques (26) et les douilles de verrouillage (34), et dans la seconde position angulaire les premiers moyens de verrouillage (38) coopèrent au niveau du segment A des barres de traction (22) avec les deuxièmes moyens de verrouillage (36) des douilles de verrouillage (34) en vue de transmettre la force de fermeture nécessaire.

2. Unité de fermeture selon la revendication 1, caractérisée en ce que les premiers moyens de verrouillage (38) présentent une denture extérieure (38) sur la barre de traction et les seconds moyens de verrouillage (36) une denture intérieure (36) sur la douille de verrouillage (34), la denture intérieure (36) et la denture extérieure étant divisées par des gorges longitudinales en au moins deux rangées de dents, de telle sorte que dans la première position angulaire les rangées de dents de la denture extérieure (38) puissent traverser axialement les gorges longitudinales de la denture intérieure (36) et les rangées de dents de la denture intérieure (36) les gorges longitudinales de la denture extérieure (38) et permettent ainsi un passage axial des barres de traction (22) à travers les vérins hydrauliques (26) et les douilles de verrouillage (34), et en ce que dans la seconde position angulaire, les dents de la denture intérieure (36) peuvent se mettre en prise derrière les dents de la denture extérieure (38) en vue de transmettre une force de traction.

3. Unité de fermeture selon la revendication 2, caractérisée en ce qu'il existe entre la denture extérieure (38) et la denture intérieure (36) un jeu axial entre les flancs qui correspond environ à la moitié de la largeur médiane d'une dent.

4. Unité de fermeture selon la revendication 2 ou 3, caractérisée en ce que les dents de la denture intérieure (36) et celles de la denture extérieure (38) sont disposées en cercle.

5. Unité de fermeture selon la revendication 2 ou 3, caractérisée en ce que les dents de la denture intérieure (36) et celles de la denture extérieure (38) sont disposées en spirale.

6. Unité de fermeture selon l'une quelconque des revendications 2 à 5, caractérisée en ce que les dents de la denture intérieure (36) et celles de la denture extérieure (38) ont une section trapézoïdale.

7. Unité de fermeture selon l'une quelconque des revendications 2 à 6, caractérisée en ce que le piston (28) du vérin hydraulique (26) est relié par un filetage tournant (50) à la douille de verrouillage (36), le piston (28) étant assuré contre la rotation, de telle sorte que la rotation de la douille de verrouillage (34) sur un angle γ de la première position angulaire à la seconde fasse avancer la barre de traction (22) par rapport au piston (28).

8. Unité de fermeture selon la revendication 7, caractérisée en ce que l'entraînement de positionnement (70) destiné à faire tourner les douilles de verrouillage (34) est disposé de part et d'autre de la première position angulaire, les douilles de verrouillage (34) avançant soit dans le sens de la fermeture, soit dans le sens de l'ouverture.

9. Unité de fermeture selon la revendication 7 ou 8, caractérisée en ce que la pente du filetage tournant (50) est conçue de telle sorte que la rotation de la douille de verrouillage (34) de la première position angulaire à la deuxième répartisse d'un seul côté le jeu S entre les flancs de la denture intérieure et extérieure (36, 38), de telle sorte qu'il n'existe plus de jeu notable entre les flancs des dents qui doivent transmettre la force.

10. Unité de fermeture selon la revendication 7, 8 ou 9, dans laquelle les dents de la denture intérieure et extérieure (36, 38) sont disposées en cercle, caractérisée en ce que la pente du filetage tournant (50) est conçue de telle sorte que la rotation de la douille de verrouillage (34) de la première position angulaire à la seconde entraîne l'avancement de la douille de verrouillage (34) sur une distance correspondant approximativement à la moitié du jeu S entre les flancs de la denture intérieure et extérieure (36, 38).

11. Unité de fermeture selon la revendication 7, 8 ou 9, dans laquelle les dents de la denture intérieure et extérieure (36, 38) forment un filetage qui présente dans le sens de la rotation une pente positive P dans le sens de la force à transmettre, caractérisée en ce que la pente du filetage tournant (50) est conçue de telle sorte que la rotation de la douille de verrouillage (34) de la première position angulaire à la seconde entraîne l'avancement de la douille de verrouillage (34) sur une distance correspondant approximativement à la moitié du jeu S entre les flancs de la denture intérieure et extérieure (36, 38) plus $(\gamma/360°)P$.

12. Unité de fermeture selon la revendication 7, 8 ou 9 dans laquelle les dents de la denture intérieure et extérieure (36, 38) forment un filetage qui présente dans le sens de la rotation une pente négative P dans le sens de la force à transmettre, caractérisée en ce que la pente du filetage tournant (50) et conçue de telle sorte que la rotation de la douille de verrouillage (34) de la première position angulaire à la seconde entraîne l'avancement de la douille de verrouillage (34) sur une distance correspondant approximativement à la moitié du jeu S entre les flancs de la denture intérieure et extérieure (36, 38) moins $(\gamma/360°)P$.

13. Unité de fermeture selon la revendication 11 ou 12, caractérisée en ce que le filetage de la denture intérieure et extérieure (36, 38) est double.

14. Unité de fermeture selon l'une quelconque des revendications 1 à 13, caractérisée en ce que la douille de verrouillage (34) est disposée sur le piston (28) du vérin (26) de manière à se trouver soumise à une contrainte de traction lors de la transmission de la force de fermeture.

15. Unité de fermeture selon la revendication 14, caractérisée en ce que la barre de traction (22) présente une limite d'allongement supérieure de 20 % environ à celle de la douille de verrouillage (34), la barre de traction (22) et la douille de verrouillage (34) étant conçues de telle sorte que les forces de traction maximales sont approximativement égales lors de la transmission de la force de fermeture.

16. Unité de fermeture selon la revendication 14 ou 15, caractérisée en ce que la longueur de la base d'une dent de la denture intérieure (36) est égale à la longueur de la base d'une dent de la denture extérieure (38).

17. Unité de fermeture selon la revendication 14, 15 ou 16, caractérisée en ce que les dents de la denture intérieure (36) présentent une plus petite aire de flanc que les dents de la denture extérieure (38) et les dents de la denture extérieure (38) présentent une dureté supérieure à celle des dents de la denture intérieure (36).

18. Unité de fermeture selon l'une quelconque des revendications 2 à 17, caractérisée en ce qu'il est prévu sur la contre-plaque (14) des patins coulissants (96) servant au guidage radial des barres de traction (22), les gorges longitudinales de la denture extérieure (38) des barres de traction (22) étant conçues comme des surfaces de guidage pour ces patins coulissants (96) et ces surfaces de guidage étant prolongées au-delà du segment de barre A portant la denture extérieure (38).

19. Unité de fermeture selon la revendication 16, 17 ou 18, caractérisée en ce que la traversée des barres de traction dans la contre-plaque (14) dans le sens axial est conçue de la manière suivante :

a) un segment annulaire pourvu de patins coulissants (96) sur le côté d'entrée ;
b) un vérin annulaire (26) ;
c) une douille de verrouillage (34) supportée avec possibilité de rotation ;
d) un mécanisme de rotation (70) destiné à faire tourner la douille de verrouillage (34) dans la première position angulaire et la seconde ; et
e) un segment annulaire pourvu de patins coulissants (96) sur le côté de sortie.

20. Unité de fermeture selon l'une quelconque des revendications 1 à 19, caractérisée en ce que l'entraînement de positionnement (70) présente une crémaillère commune (72) pour chaque paire de douilles de verrouillage (34).

21. Unité de fermeture selon la revendication 20, caractérisée en ce que la crémaillère (72) présente à chaque extrémité un alésage de cylindre (76', 76"),

en ce que les deux alésages de cylindre (76', 76") contiennent chacun un piston fixe (78', 78") introduit de manière étanche, de telle sorte que la crémaillère puisse se déplacer en va-et-vient entre les deux pistons stationnaires (78', 78"),
et en ce que les deux alésages de cylindre (76', 76") peuvent être soumis à l'action d'un fluide sous pression derrière les pistons (78', 78"), de manière à constituer deux vérins sous pression travaillant en sens inverse l'un de l'autre pour déplacer la crémaillère (72).

22. Unité de fermeture selon la revendication 21, caractérisée en ce que chaque piston (78', 78") présente un canal de raccordement axial (82', 82") pour un fluide sous pression.

23. Unité de fermeture selon la revendication 21 ou 22, caractérisée en ce qu'elle comporte une douille d'entraînement (58', 58") avec une denture extérieure (38) qui se met en prise par engagement positif dans les dents de la crémaillère (72), la douille d'entraînement (58', 58") étant supportée avec possibilité de rotation dans un boîtier et présentant une ouverture pour l'introduction axiale de la douille de verrouillage (34), et des moyens d'accouplement pour la transmission par engagement positif d'un couple de rotation de la douille d'entraînement (58', 58") à la douille de verrouillage (34) introduite dans celle-ci, ces moyens de couplage étant conçus de telle sorte qu'ils permettent une translation axiale de la douille de verrouillage (34) dans la douille d'entraînement (58', 58").

24. Unité de fermeture selon la revendication 23, caractérisée en ce que les moyens d'accouplement sont conçus comme une liaison à dents ou à arbre cannelé.

25. Unité de fermeture selon l'une quelconque des revendications 1 à 24, caractérisée en ce que les vérins (26) sont conçus comme des vérins sous pression annulaires à double action possédant chacun une première chambre de pression (30) destinée à maintenir le moule d'injection fermé et une seconde chambre de pression (31) pour l'ouverture du moule d'injection.

26. Unité de fermeture selon la revendication 25, caractérisée en ce qu'elle comporte une soupape proportionnelle à 4/3 voies (100) avec une première sortie active et une seconde, la première sortie active étant reliée par les soupapes à 2/2 voies (102) avec les premières chambres de pression (30) de tous les vérins (26) et la seconde sortie active étant reliée aux secondes chambres de pression (31) de tous les vérins (26).

27. Unité de fermeture selon l'une quelconque des revendications 2 à 26, caractérisée en ce qu'elle comporte un capteur de position (108) détectant

la position réelle du piston (28) de chaque vérin (26),

une soupape à 2/2 voies (102) pour chaque vérin (26), une unité de commande (106) qui ferme la soupape à 2/2 voies (102) lorsque la position du piston (28) correspond à une position de consigne prédéterminée.

28. Unité de fermeture selon l'une quelconque des revendications 2 à 27, caractérisée en ce qu'elle comporte une unité de commande (106) pour le positionnement axial des pistons (28) des vérins (26) dans une position de repos calculée de telle sorte que lorsque les douilles de verrouillage (34) tournent pour passer de leur première position angulaire à la seconde, les dents de la denture intérieure (36) se trouvent entre les dents de la denture extérieure (38) dans le sens axial.

29. Unité de fermeture selon l'une quelconque des revendications 2 à 28, caractérisée en ce qu'elle comporte un capteur de position pour la plaque de fermeture (20),

un capteur de position (108) pour la position réelle du piston (28) de chaque vérin (26), une unité de calcul destinée à calculer une position de repos des pistons (28) en fonction de la position mesurée de la plaque de fermeture (20) de telle sorte qu'avant l'engagement de la denture intérieure (36) des douilles de verrouillage (34) dans la denture extérieure (38) des barres de traction (22), les dents de la denture intérieure (36) se trouvent entre celles de la denture extérieure (38) dans le sens axial, et une unité de commande (106) utilisant comme signaux d'entrée les valeurs mesurées par les capteurs de position des pistons (28) pour amener les pistons (28) dans la position de repos calculée.

FIG. 1

FIG. 2

FIG. 3

FIG. 4

FIG. 5

FIG. 6

FIG. 7

A–A

FIG. 8

B–B

EP 0 833 737 B1

FIG.9

FIG. 10

EP 0 833 737 B1

FIG. 12

FIG. 14

FIG. 11

FIG. 13

FIG. 15          FIG. 16

EP 0 833 737 B1

FIG. 17

FIG. 18

EP 0 833 737 B1

FIG. 19                    FIG. 20

FIG. 21